(19) Europäisches Patentamt
European Patent Office
Office européen des brevets

(11) **EP 2 112 818 B1**

(12) **EUROPÄISCHE PATENTSCHRIFT**

(45) Veröffentlichungstag und Bekanntmachung des Hinweises auf die Patenterteilung:
**10.06.2015 Patentblatt 2015/24**

(51) Int Cl.:
*H04N 1/407* *(2006.01)*    *H04N 1/405* *(2006.01)*

(21) Anmeldenummer: **09157196.8**

(22) Anmeldetag: **02.04.2009**

(54) **Verfahren zur Reduzierung der Flächendeckung einer Druckplatte**

Method for reducing the area coverage of a printing plate

Procédé de réduction de la couverture de surface d'une plaque de compression

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **22.04.2008 DE 102008020214**
**08.08.2008 DE 102008037087**

(43) Veröffentlichungstag der Anmeldung:
**28.10.2009 Patentblatt 2009/44**

(73) Patentinhaber: **Heidelberger Druckmaschinen Aktiengesellschaft**
**69115 Heidelberg (DE)**

(72) Erfinder:
• **Blum, Dietrich**
**24146 Kiel (DE)**
• **Gembe, Andreas**
**69181 Leimen-Gauangelloch (DE)**

(56) Entgegenhaltungen:
**US-A1- 2007 047 001    US-B1- 6 532 082**

**Beschreibung**

In Offsetdruckmaschinen werden derzeit zwei prinzipiell unterschiedliche Typen von Farbwerken eingesetzt. Insbesondere im Bogenoffset sind sogenannte Zonenfarbwerke verbreitet, die über die Bogenbreite eine Vielzahl von einzeln einstellbaren Zonenschrauben besitzen. Mit denen lässt sich entsprechend dem zu druckenden Sujet die von den Walzen des Farbwerks geförderte und der Druckplatte angebotene Farbmenge in den zugehörigen zonenförmigen Bereichen unterschiedlich einstellen. Farbwerke des zweiten Typs sind sogenannte "Anilox"-Farbwerke, häufig auch als Kurzfarbwerk bezeichnet. Diese besitzen eine Rasterwalze mit einer fixen Näpfchenbelegung, die sich im Kontakt mit einem Farbreservoir dreht und von einer Rakel über die gesamte Breite abgerakelt wird. Dieses Farbwerk stellt der Druckplatte über die gesamte Breite eine einheitliche Farbmenge zur Verfügung, die sich auch nur in sehr geringem Umfange beispielsweise durch Temperierung über die Viskosität der Farbe beeinflussen lässt. Größere Änderungen im Farbbedarf erfordern einen relativ aufwändigen Austausch der kompletten Rasterwalze gegen eine mit einer anderen Näpfchenbelegung.

Anilox-Farbwerk sind im Rollenoffset stärker verbreitet, insbesondere bei Zeitungsdruckmaschinen. Daneben sind in letzter Zeit aber auch Bogenoffsetdruckmaschinen mit Anilox-Farbwerken bekannt geworden.

Der zu bedruckende Bogen erfordert je nach verwendetem Papier, verwendeter Farbe, etc. unterschiedliche Farbmengen, um eine definierte Flächendeckung bzw. Volltondichte zu erzielen. Da das Farbangebot bei Anilox-Farbwerken wie oben gesagt über die Viskosität nur in einem sehr engen Bereich verändert werden kann und der aufwändige Austausch von Rasterwalzen gescheut wird, ist auch schon vorgeschlagen worden, die auf den Druckbogen zu übertragende Farbmenge über eine Modifizierung des gerasterten Druckbilds zu verändern. Die bekannten Vorschläge zielen darauf ab, die Flächendeckung des gerasterten Druckbilds gezielt zu verringern. Dazu schlägt die EP 0 770 228 B1 vor, dem Druckbild ein stochastisches Raster von Weißpunkten zu überlagern oder auf einem auf die Druckform umzukopierenden Film ein entsprechendes Raster von Schwarzpunkten zu setzen. Die EP 1 251 011 B1 beschreibt ein Verfahren, bei dem in das bereits gerasterte Bild bzw. in die Flächenelemente der binären Bildinformation, die den Plattenbelichter steuern, ein feines Lochmuster einbelichtet wird, das ebenfalls wie in der EP 0 770 228 B1 stochastisch angelegt sein kann. Ein ganz ähnliches Verfahren ist auch in der DE 199 53 145 A1 für einen Laserproofer beschrieben.

Beim Druckvorgang laufen die Löcher bzw. Weißpunkte des feineren Rasters mit Farbe aus den Nachbarpixeln zu, so dass sie nicht mehr sichtbar sind. Dadurch verringert sich die Farbschichtdicke des gedruckten Bildes insgesamt in dem Verhältnis der Weißpunkte zu den mit Farbe belegten Pixeln, also in der gewünschten Weise.

Diese bekannten Verfahren greifen bei oder nach der Rasterung des Druckbildes in das bereits gerasterte Druckbild ein. Vordergründig betrachtet hat dies den Vorteil, dass die bereits gerasterten Datensätze für die Belichtung der Druckplatten nicht noch einmal in die Druckvorstufe müssen und ein zweites Mal gerastert werden müssen, wenn das gleiche Druckbild mit einer hinsichtlich der Flächendeckung reduzierten Druckplatte nochmals gedruckt werden soll. Dieser Fall tritt in der Praxis allerdings nicht häufig auf. Denn bei konstanten Produktionsbedingungen auf z. B. stets der gleichen Druckmaschine mit Anilox-Farbwerk wird der Prozess der Flächenreduktion immer der gleiche sein, so dass ein zusätzlicher Prozess zur Herstellung einer zweiten Platte mit reduzierter Flächendeckung nachteilig ist. Die einfache Überlagerung des Rasterbildes mit einem Raster von Weißpunkten besitzt jedoch noch weitere Nachteile. Die sind u. a. darin zu sehen, dass bei größeren Reduzierungen der Flächendichte die Druckpunkte unsauber werden und die Tonwertcharakteristik durch einen erhöhten Punktzuwachs gestört wird. Ebenso nachteilig ist beiden Verfahren nach dem Stand der Technik , dass der Bildinhalt bei der Reduzierung der Flächendeckung nur unzureichend berücksichtigt wird. Die gleichmäßige Überlagerung des Druckbilds mit einem Weißpunktraster erzeugt außerdem im Druckbild eine visuell wahrnehmbare Unruhe über den kompletten Tonwertbereich.

In der US 6,532,082 B1 sind drei alternative Verfahren zur Überlagerung des Druckbilds mit einem Weißpunktraster beschrieben. In der ersten Alternative wird die Schwellwertmatrix so verändert, dass in den Bildpunkten des gerasterten Bildes weiße Pixel auftreten. In der zweiten Alternative werden die Weißpunkte nach dem Rastern der Bitmap des Rasterbildes hinzugefügt. Im dritten Beispiel werden bereits in der Bilddatei, die beispielsweise als Postscript-Datei vorliegt, die Weißpunkte nach einem festen Muster eingeschrieben oder den Bilddaten beim Rasterprozess überlagert. Bei der letztgenannten Verfahrensvariante bleibt offen, ob die Weißpunkte tatsächlich auf Bildpunkte im gerasterten Bild fallen.

Der Erfindung liegt die Aufgabe zugrunde, ein Verfahren anzugeben, mit dem sich die Flächendeckung des zu druckenden Bildes in einer verglichen mit dem Stand der Technik und bezogen auf die als Ergebnis entstehende Druckplatte qualitativ hochwertigen Weise verändern lässt.

Diese Aufgabe wird mit den im Anspruch 1 und 10 angegebenen Maßnahmen gelöst.

Gemäß der Erfindung wird zur Reduzierung der Flächendichte in die Daten eingegriffen, die vor dem eigentlichen Prozess des Rasterns des Druckbildes vorliegen bzw. für den Prozess des Rasterns erst benötigt werden. Das können beispielsweise die später zu rasternden Halbtonbilddaten sein oder aber auch die Schwellwertmatrix, die als Werkzeug zur Rasterung der Bilddaten nach einem vorgegebenen Rasterverfahren benötigt wird. Im ersteren Falle wird so vorgegangen, dass zuerst eine Halbtonrepräsentation des Bogens in der Auflösung erzeugt wird, mit der später bei der Rasterung Pixel erzeugt werden. Danach werden diese Daten, die den Bogen repräsentieren, in Mikroflächen unterteilt und in jeder Mikrofläche ein Wert berechnet, der ein Maß dafür ist, wie viele Pixel der Mikrofläche gelöscht werden sollen. Auf diese Weise entsteht ein "durchlöchertes" Halbtonbild, das nach dem Durchlaufen der anschließenden Rasterung die gewünschte Reduzierung der Tonwerte enthält, wobei die im Originalbild gesetzten "Löcher" sich am Bildinhalt orientieren und nur dort gesetzt werden, wo auch tatsächlich Bildinhalt ist und nicht, wie im Stand der Technik, nach einem vorgegebenen Raster über die gesamte Fläche des Bogens. Anstelle der Einleitung der Halbtonpräsentation in Mikroflächen ist es auch möglich, ein flächenhaftes Filter über die Halbtondaten laufen zu lassen, beispielsweise ein Konvolution-Filter, das die gewichteten Tonwerte der Nachbarpixel aufsummiert. In diesem Falle übernimmt der jeweilige Bildbereich, in dem die zum Summenwert beitragenden Pixel liegen, die Funktion der vorgenannten Mikroflächen.

Im zweiten Falle wird die Schwellwertmatrix manipuliert.

Hier wird so vorgegangen, dass im Wesentlichen lediglich die Volltonbereiche, also beispielsweise die Bildteile mit einem Tonwertbereich von 99 % bis 100 %, mit einer stochastischen Struktur von Weißpunkten durchlöchert und damit im Tonwert reduziert werden. Die darunterliegenden Tonwerte (0 % bis 99 %) werden nicht durch die stochastische Weißpunktstruktur durchlöchert, sondern bleiben davon unberührt. An ihnen wird lediglich eine Tonwertanpassung vorgenommen, indem sie zur Vermeidung eines Dichtesprunges mit bekannten Softwaretools rekalibriert bzw. neu linearisiert werden, so dass der Bereich der Flächendeckung mit dem für den Druckjob gewählten Raster für die Tonwerte von 0 bis 99 % einem Bereich der Flächendeckung zwischen 0 % und dem Wert entspricht, auf den die Volltondichte reduziert werden soll bzw. sich an diesen reduzierten Wert anschließt.

Die Reduktion der Volltonflächen durch Überlagerung mit den Weißpunkten kann zweckmäßig einfach dadurch erfolgen, dass die Volltonflächen frequenzmoduliert gerastert werden, während für die Tonwerte unterhalb des Volltons beispielsweise ein amplitudenmoduliertes Raster verwendet wird.

Der Vorteil dieser Verfahrensvariante liegt zum einen darin, dass die üblichen in der Druckvorstufe vorhandenen Arbeitsmittel wie Kalibrierungs-/Linearisierungssoftware, frequenzmodulierte und amplitudenmodulierte Raster etc. verwendet werden können. Das Raster für die Weißpunktstruktur kann frei gewählt werden und wirkt sich nicht negativ auf die Rasterung der Tonwerte von 0 bis 99 % aus. Der gesamte Arbeitsablauf ist für das damit betraute Personal leicht nachvollziehbar und im Ergebnis sichtbar und messbar. Zudem bleibt das Raster in den Tonwertbereichen unterhalb des Volltons ungestört, so dass keine Unruhen beim Ausdruck des gerasterten Bildes entstehen.

Beiden Varianten ist gemeinsam, dass die so modifizierten Daten ohne Einschränkungen mit allen bekannten Rasterverfahren verwendet werden können und dass praktisch kein Performance-Verlust gegenüber einer Rasterung der "unbehandelten" Daten eintritt.

Zudem können gemäß der Erfindung die Rasterung des Druckjobs und die Reduzierung der Flächendeckung vorteilhaft in einem Prozess durchgeführt werden.

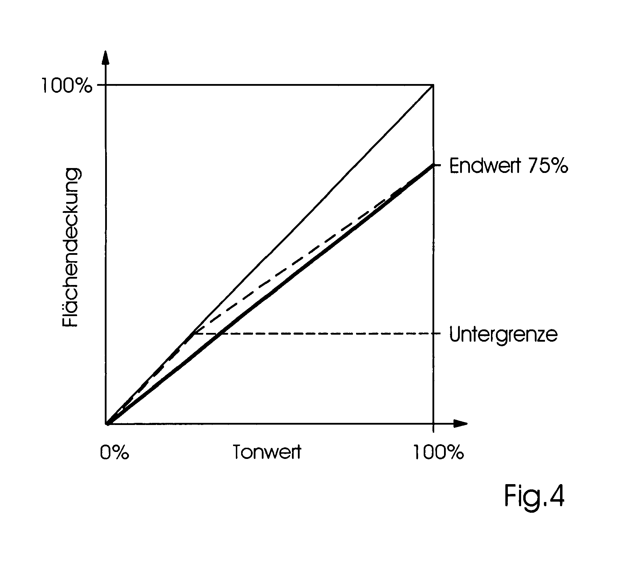

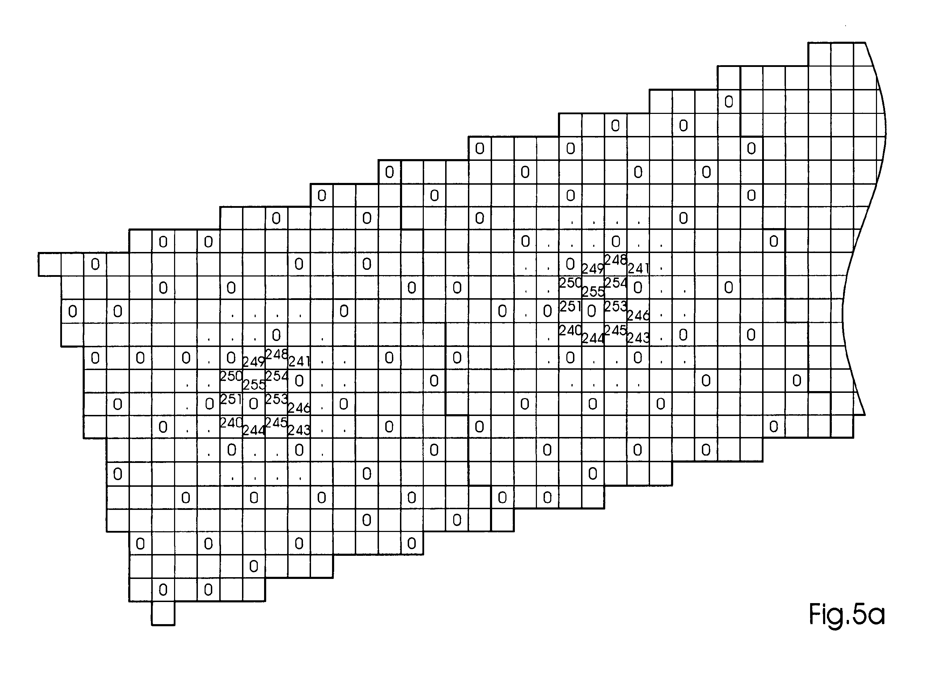

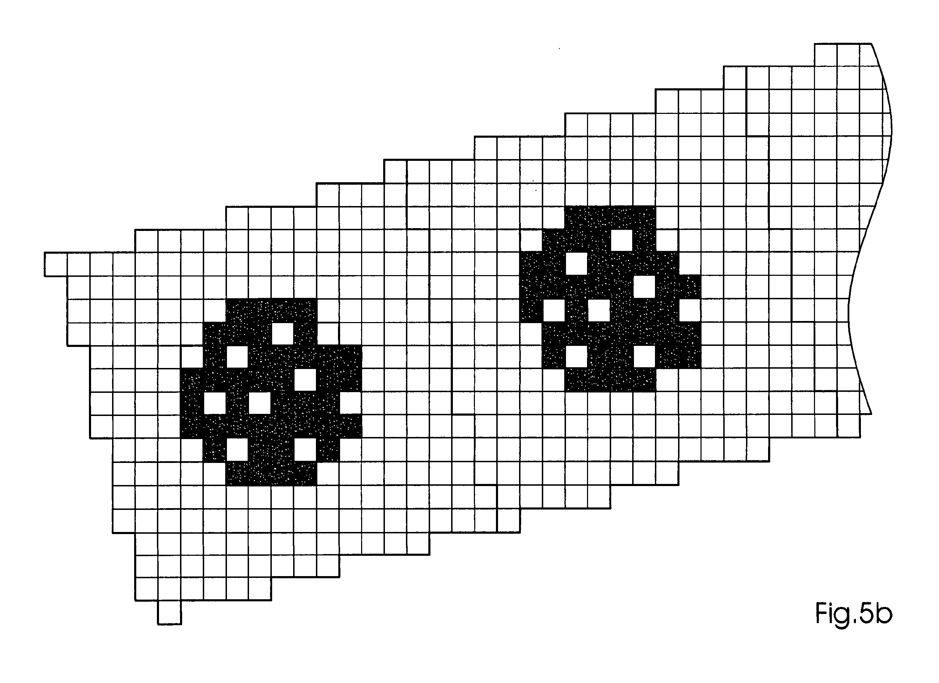

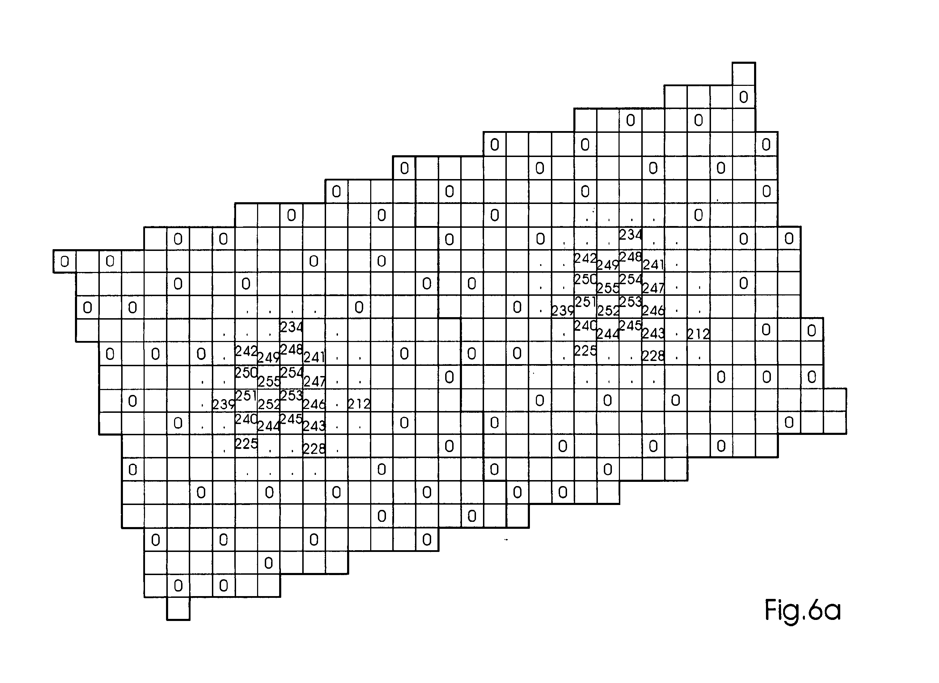

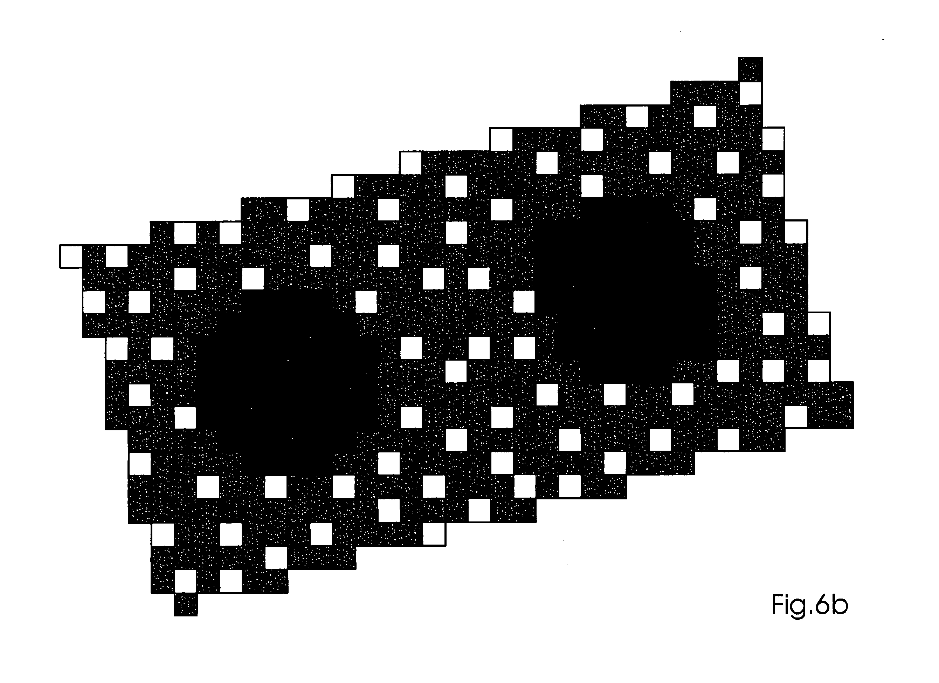

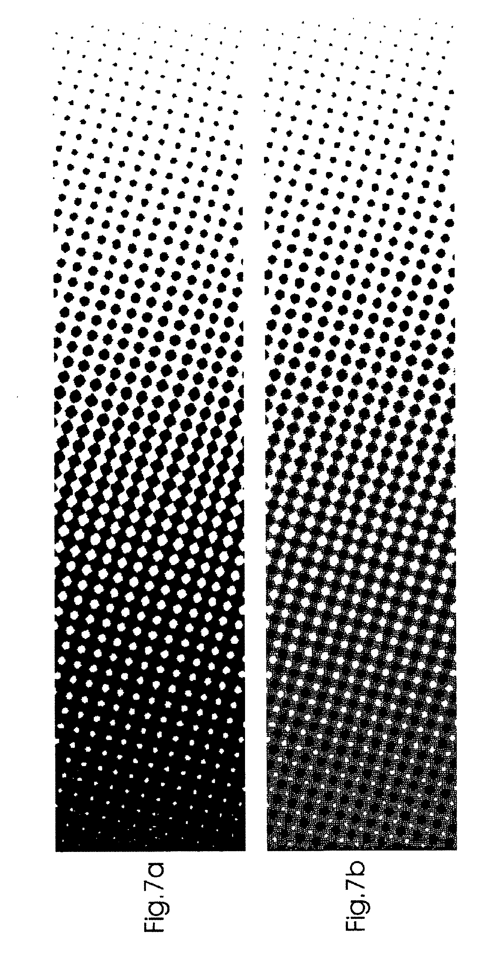

Weitere Vorteile der Erfindung ergeben sich aus der nachfolgenden Beschreibung von Ausführungsbeispielen anhand der Figuren 1 bis 7 der beigefügten Zeichnungen.

Figur 1        ist ein Ablaufschema, das das erfindungsgemäße Verfahren zur Herstellung von modifizierten Druckvorlagen wiedergibt,

Figur 2        ist eine vereinfachte Darstellung der zu modifizierten Bilddaten nach einem ersten Ausführungsbeispiel der Erfindung,

Figur 3a+b     sind vereinfachte Darstellungen des Teilbereichs einer Schwellwertmatrix, die zur Erläuterung des Rasterprozesses dienen,

Figur 4        ist ein Diagramm, in dem der Zusammenhang zwischen den Tonwerten eines zu rasternden Bildes und der Flächendeckung beim Druck dargestellt ist,

Figur 8        ist ein Diagramm, in dem der Zusammenhang zwischen den Tonwerten eines zu rasternden Bildes und der Flächendeckung beim Druck dargestellt ist, und

Figur 9        ist eine vereinfachte Darstellung von einzelnen Rasterzellen bei verschiedenen Tonwerten im Falle einer "normalen" Rasterung (obere Zeile) und einer Rasterung mit reduzierter Flächendeckung gemäß einem zweiten Ausführungsbeispiel der Erfindung.

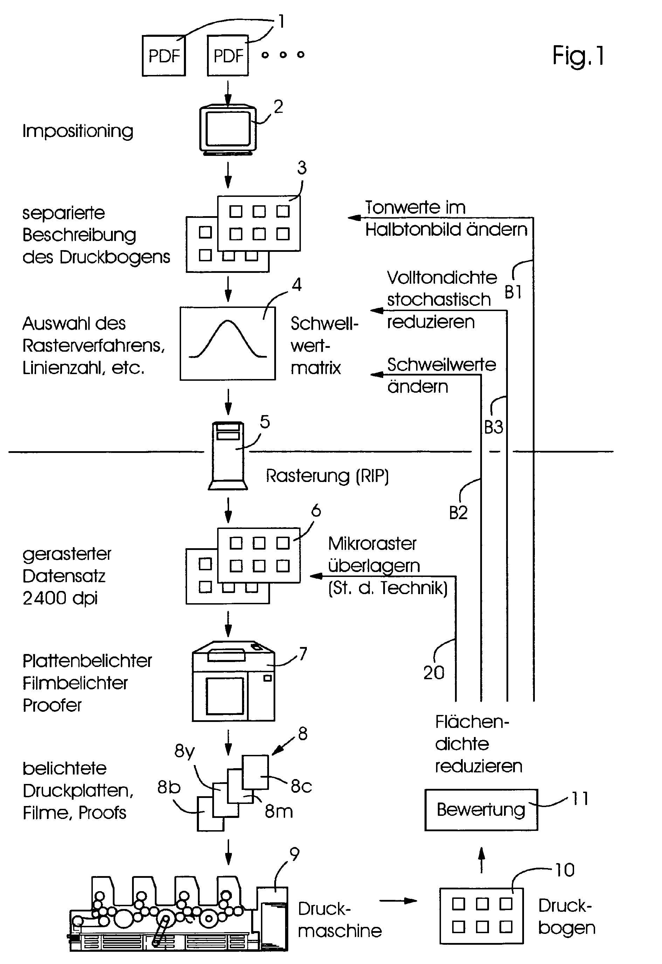

In Figur 1 ist der zeitliche Ablauf einzelner Schritte in der Druckvorstufe, soweit sie für das Verständnis der Erfindung erforderlich sind, in Form eines Ablaufschemas dargestellt. Die Darstellung beginnt hier mit dem optionalen Schritt, bei dem die nach dem Setzen beispielsweise im PDF-Format vorliegenden Seiten des zu druckenden Produktes ausgeschossen werden. Bei diesem in der Figur mit "Impositioning" bezeichneten Schritt werden mehrere Seiten zu einem Druckbogen zusammengestellt. Anschließend erfolgt im Rahmen eines in der Druckvorstufe üblichen Datenverarbeitungsprozesses eine Transformation der Eingangsdaten in einen einheitlichen Druckfarbraum. Dabei werden ür die z. B. vier Druckfarben separierte Beschreibungen 3 des Druckbogens erzeugt, auf denen die Seiten 1 so angeordnet sind, wie sie anschließend gedruckt werden sollen.

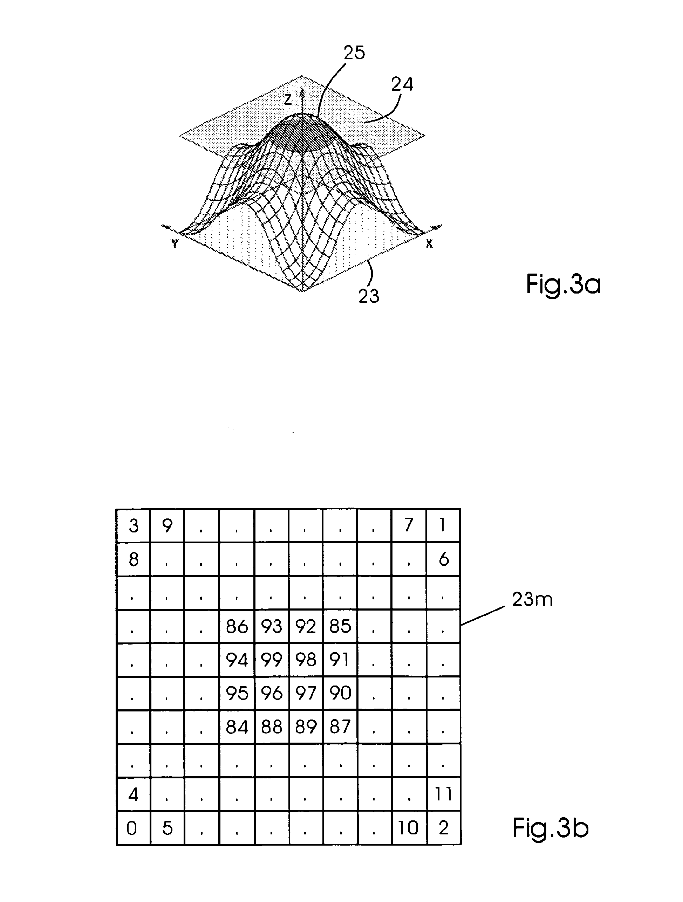

Die in Form von Halbtonbildern vorliegenden separierten Beschreibungen 3 sollen anschließend in Rasterdaten umgesetzt werden. Dazu ist zuerst das für den vorliegenden Druckjob geeignete Rasterverfahren (z. B. Amplitudenmodulation oder Frequenzmodulation, rationales oder irrationales Raster etc.), die Linienanzahl etc. auszuwählen. Entsprechend dieser Auswahl wird eine Schwellwertmatrix 4 erzeugt, die dazu dient, die Tonwerte in den Halbtonbildern der Beschreibungen 3 durch Vergleich mit den Einträgen für die Pixel in der Schwellwertmatrix in zu belichtende oder nicht zu belichtende Pixel im gerasterten Datensatz zu überführen. Die Werte in den Zellen der Schwellwertmatrix 4 bilden für amplitudenmodulierte Raster z.B. die Form eines Glockenmantels, wie er in Figur 3a dargestellt ist. Für frequenzmodulierte Raster sieht das "Gebirge", das die Werte in der Matrix darstellen, natürlich anders aus.

Der Rasterprozessor (RIP) 5 erzeugt durch Vergleich der Einträge in der Schwellwertmatrix 4 mit den Tonwerten der Dateien 3, die den Druckbogen beschreiben, einen gerasterten Datensatz 6 mit einer Auflösung von typischerweise 2.400 dpi oder 2540 dpi. Diese ebenfalls für jede zu druckende Farbe vorliegenden Datensätze 6 dienen dazu, den Plattenbelichter 7 anzusteuern, mit dem die Druckplatten 8b, 8y, 8m, 8c für das Drucken mit den vier Farben Schwarz, Gelb, Magenta und Cyan direkt bebildert werden. Mit den so erzeugten Druckplatten 8 werden in einer Druckmaschine 9, beispielsweise einer Bogenoffset-Druckmaschine, dann die Druckbogen 10 gedruckt. Alternativ dazu können auch Filme bebildert werden, die dann auf die Druckplatten umkopiert werden oder es wird auf einem Proofgerät zuerst einmal ein Probebogen in einem anderen Druckverfahren, z. B. per Inkjetdruck oder Laserdruck, hergestellt.

Die Druckmaschine 9 besitzt in dem vorliegenden Falle sogenannte Anilox-Farbwerke, wie sie beispielsweise in der EP 1 834 775 A2 beschrieben sind. Wie eingangs bereits ausgeführt lässt sich mit diesen Farbwerken die Farbmenge, mit der die Platten 8 eingefärbt werden, nur in engen Grenzen steuern. Wenn nun beim Druck bei einer oder mehreren Farben eine zu hohe Volltondichte entsteht wird für die betroffenen Farben im Rahmen eines Arbeitsvorbereitungsprozesses in der Druckerei wie folgt vorgegangen:

Der Drucker bewertet den Bogen 10 dahingehend, ob und in welchem Ausmaß der störende Effekt durch eine Herabsetzung der Flächendichte der Bildinformationen auf der Druckplatte reduziert werden kann. Diesen Schritt des Bewertens haben wir mit 11 bezeichnet. Selbstverständlich muss diese Bewertung nicht für jeden Druckbogen, sondern kann auch nur anhand von Testseiten durchgeführt werden. Statt einer visuellen Bewertung, die auf Erfahrungswerten beruht, ist es natürlich auch möglich, den Druckbogen hinsichtlich der aufgedruckten Farbschichtmenge auszuwerten d. h. ihn densitometrisch oder spektral auszumessen. Dabei geht es hauptsächlich um die Ermittelung der Volltondichte.

Nach dem eingangs genannten Stand der Technik könnte man nun dem gerasterten Datensatz ein Mikroraster überlagern und anschließend einen zweiten Satz Druckplatten belichten, mit denen der Druckjob dann in der gewünschten Qualität ausgeführt werden kann, wie das durch den entsprechenden Pfeil 20 in Figur 1 symbolisiert ist. Gemäß der Erfindung wird bei der Produktion an anderer Stelle in die Abläufe der Druckvorstufe eingegriffen:

Beispiel 1:

Gemäß dem ersten Ausführungsbeispiel der Erfindung (B1) wird an der Stelle, wo die separierte Beschreibung des Druckbogens 3 erzeugt wird, eine Halbtondatei erzeugt, die alle erforderlichen Informationen für die zu belichtende Platte des betreffenden Farbauszuges besitzt und zwar in einer Ebene, d. h. es handelt sich hier nicht mehr wie in Seitenbeschreibungssprachen üblich um verschiedene grafische Objekte , die teils auch überlappend den Druckbogen beschreiben, sondern um einen einzigen Datensatz oder mehrere Datensätze, die direkt aneinander anschließende Pixel enthalten und in ihrer Gesamtheit einem Halbtonbild entsprechen. In diesen Datensätzen ist die Halbtoninfrormation in einer bestimmten Grautiefe von z. B. 8 Bit oder auch einer variablen Grautiefe von z. B. 8 und 12 Bit codiert. Sie werden mit der gleichen Auflösung erstellt, wie sie der gerasterte Datensatz 6 von z. B. 2.400 dpi besitzt d. h. die Menge der Bildpixel in diesem neu zu erzeugenden Halbtonbild entspricht der Menge der Rasterpixel im gerasterten Datensatz 6. Optional kann für die Auflösung des Halbtonbildes auch eine ganzzahlige Untermenge des Rasterbildes gewählt werden. Dies kann unabhängig voneinander auch unterschiedlich in beiden Achsen sein. Wegen der sehr hohen Datenmenge der Datensätze werden diese entweder nur vorübergehen im RAM erzeugt oder mit einer geeigneten Kompression als Datei gespeichert.

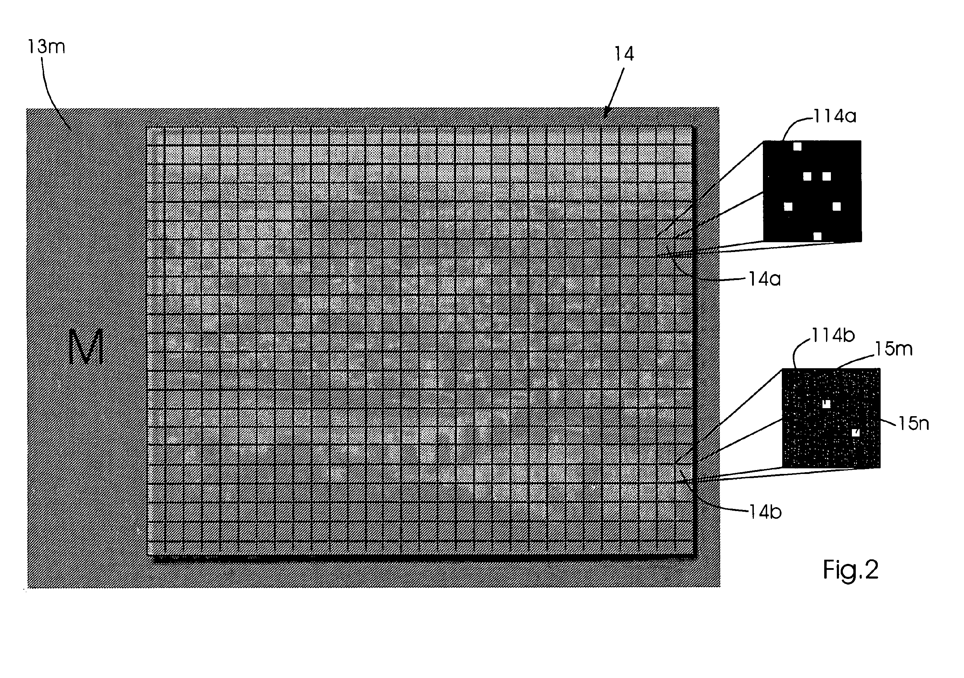

Das Ausführungsbeispiel wird anhand von Figur 2 näher erläutert. Die visuelle Darstellung des dort beispielsweise für die Farbe Magenta erzeugten Datensatzes ist mit 13m bezeichnet. Dieses Graubild besteht aus einzelnen Pixeln, die in der herausgezoomten Darstellung auf der rechten Seite z. B. mit 114a und 114b bezeichnet sind. Die Pixel dieses Datenfeldes 14 sind jeweils zu quadratischen Bereichen zusammengefasst, von denen die Bereiche 14a und 14b beispielhaft herausgezoomt dargestellt sind. Gemäß diesem Ausführungsbeispiel der Erfindung werden nun die nachfolgend als Mikroflächen bezeichneten quadratischen Bereiche 14a, 14b..... des gesamten Datensatzes im Bezug auf den durchschnittlichen Tonwert jeder Mikrofläche ausgewertet. Mit diesem Durchschnittswert wird berechnet wie viele Pixel 114 z. B. in der Mikrofläche 14 gelöscht werden müssen, um den Tonwert der Mikrofläche insgesamt in dem Maß herabzusetzen, dass auf dem gedruckten Bogen eine Reduktion der Farbschichtdicke im gewünschten Umfang entsteht. Statt der Berechnung kann auch eine Tabelle indiziert werden, in der die entsprechende Information abgelegt ist. Wenn also beispielsweise die Farbschichtdicke um 10 % reduziert werden muss, kann das für den im Vergleich zu den Tonwerten des Gesamtbildes relativ hellen Bereich 14b bedeuten, dass dort in der Mikrofläche 14b zwei Pixel, nämlich die Pixel 15n und 15m, "auf Weiß gesetzt" werden. Für die im Mittel dunklere Mikrofläche 14a hingegen kann es bedeuten, dass dort wie im Beispiel dargestellt sechs Pixel auf Weiß gesetzt werden.

Die Entscheidung darüber, welche der Pixel innerhalb der Mikrofläche "auf Weiß gesetzt" werden, orientiert sich an der Tonwertverteilung innerhalb der Mikrofläche. Es wird also bevorzugt, die Weißpunkte zufällig um den Schwerpunkt der Tonwertverteilung herum zu verteilen.

Auf diese Weise entsteht ein durchlöchertes Halbtonbild, in dem dann nach Durchlaufen eines Tiefpasses die Bilddaten hinsichtlich ihres mittleren Tonwertes in der durch die Tabelle festgelegten, gewünschten Weise reduziert sein würden. Tatsächlich ist die explizite Anwendung eines Tiefpasses jedoch nicht erforderlich.

Denn die Rasterung durch den Rasterprozessor 5 stellt bereits einen solchen Tiefpass dar. Wenn also das wie beschrieben durchlöcherte Bild bzw. der zugehörige Datensatz gerastert wird, dann werden die gelöschten bzw. auf Weiß gesetzten Pixel des Halbtonbildes in dem entsprechenden gerasterten Datensatz 6 mit der Wahrscheinlichkeit sichtbar, die der Flächendeckung durch die Rasterung entspricht und reduzieren somit die resultierende Flächendeckung auf der belichteten Platte, wenn mit dieser gedruckt wird und die von den verbleibenden "schwarzen" Pixeln von der Druckplatte aus dem Farbwerk aufgenommene Farbe dann beim Abdruck auf den Bogen in die "auf Weiß" gesetzten Pixel bzw. den dazugehörenden Stellen auf dem Bogen abgegeben wird. Natürlich ist es auch möglich, den Zusammenhang zwischen der gewünschten Reduzierung der Flächendeckung und der Zahl der zu setzenden Weißpunkte zu berechnen. Formelmäßig lässt sich dieser Zusammenhang näherungsweise so darstellen:

Der mittlere Tonwert einer Mikrofläche $T_M$ ergibt sich zu

$$T_M = \frac{1}{N_G} \sum_{n=1}^{N_G} T_n x G_n$$

Hierbei ist $N_G$ die Gesamtzahl aller Pixel der Mikrofläche, $T_N$ der individuelle Tonwert jedes Pixels in der Mikrofläche, der aufzusummieren ist, und $G_N$ ein individueller Gewichtungsfaktor für jeden Tonwert, über den beispielsweise eine Kalibrierung in das Ergebnis hineingerechnet werden kann.

Die Anzahl der zu löschenden Pixel $N_L$ ergibt sich aus der Anzahl $N_M$ der Pixel einer Mikrofläche, die bei maximalem Tonwert $T_{max}$ benötigt werden, um im Mittel den aktuellen mittleren Tonwert $T_M$ in der Mikrofläche zu erreichen zu

$$N_L = (N_M - N_S - X) \; x \; A$$

Hierbei ist $N_S$ eine Anzahl von Pixeln, die jedenfalls nicht modifiziert werden sollen (um das "Farbpotential" beim Zulaufen der auf Weiß gesetzten Pixel im Druck zu sichern), X eine Hilfsgröße und A ein Anpassungsfaktor mit:

$$N_M = N_G \; x \; \frac{T_M}{T_{max}},$$

die Hilfsgröße X wiederum ergibt sich zu

$$X = (T_M - T_S) \; x \; \frac{T_{max} - T_S}{R x N_G - N_S},$$

wobei wie schon gesagt $T_{max}$ der maximale Tonwert, $T_S$ der sich aus der Anzahl der nicht zu modifizierenden Zellen $N_S$ ergebende Tonwert ist und R die gewünschte Reduzierung für den Vollton in Prozent darstellt.

Der Anpassungsfaktor A kann berücksichtigen, dass das Ausmaß der Korrektur und damit die Zahl der in den Mikroflächen zu löschenden Pixel auch von der verwendeten Druckfarbe abhängen kann sowie von der Anordnung des der jeweiligen Farbe zugeordneten Druckwerks innerhalb der Maschine. Beispielsweise wird die im letzten Druckwerk aufgetragene Farbe anschließend nicht mehr überrollt, weil keine weiteren Druckwerke folgen, was sich wiederum darauf auswirkt, in welchem Umfange Druckfarbe von den "auf Weiß" gesetzten Pixeln aus den gefärbten Nachbarpixeln abnehmen lässt.

Die entsprechenden Algorithmen zur Erzeugung des hochaufgelösten Halbtonbildes 13m sowie des Einsetzens der Weißpunkte in die Mikroflächen 14 dieser Datei können von einer geeigneten Software bereitgestellt werden bzw. es bereitet keine Schwierigkeit, die entsprechende Abläufe in Software zu programmieren, um aus den bekannten bzw. vorhandenen Datensätzen der Druckvorstufe die Datensätze mit den vorstehend beschriebenen Eigenschaften abzuleiten.

Die Rechenvorschrift für das Setzen der Weißpunkte kann durch Anwendung von Konvolution-Filtermechanismen erfolgen. Ein Konvolution-Filter ist ein Tiefpass, bei dessen Anwendung der Wert eines Bildpunktes durch einen modifizierten Wert ersetzt wird, der sich aus einer gewichteten Summe der Werte der Nachbarbildpunkte ergibt, wobei die Gewichtungsfaktoren für die verschiedenen Nachbarpunkte unterschiedlich sein können. Ein derartiges Konvolution-Filter entspricht insoweit einer Einteilung des Bildes in Mikroflächen, als über die Berücksichtigung der benachbarten Bildpunkte eine Fläche definiert wird, aus der die Tonwerte entsprechend den Gewichtungsfaktoren summiert werden. In dem Fall läuft das Setzen der Weißpunkte in dem Graubild des Datensatzes 13m nach Figur 2 folgendermaßen ab: Das Bild wird Zeile für Zeile oder in einer anderen, z. B. mäanderförmigen Geometrie, Bildpunkt für Bildpunkt abgefahren und es werden die Tonwerte des Bildpunktes selbst und seiner Nachbarbildpunkte beispielsweise in einer 5 x 5 oder 8 x 8 Bildpunkte umfassenden Gebiet entsprechend vordefinierter Gewichtungsfaktoren zu einem gewichteten Tonwert aufsummiert. Bei jedem Schritt zum nächsten Bildpunkt werden diese gewichteten Tonwerte wiederum summiert. Immer dann, wenn ein gesetzter Schwellwert erreicht ist, der ein Maß für die Reduzierung der Flächendichte ist, wird veranlasst, dass der dann erreichte Bildpunkt gelöscht d. h. auf Weiß gesetzt wird. Auf diese Weise fortschreitend wird der Datensatz mit einem Netz aus Weißpunkten überzogen, wobei diese folglich umso dichter liegen, je größer die Tonwerte an den betreffenden Stellen im Bild sind.

Dieses Verfahren lässt sich noch modifizieren, indem man zusätzlich und zwar beim Vergleich der aufsummierten gewichteten Tonwerte mit dem Schwellwert sogenannte "Error Diffusion"-Mechanismen einbaut. Vereinfacht gesprochen geht man so vor, dass die überzählige Differenz zwischen den aufsummierten gewichteten Tonwerten und dem Schwellwert gespeichert und den für das Setzen des nächsten Weißpunktes zu summierenden Tonwerten hinzugeschlagen wird.

In dieser vorstehend beschriebenen Verfahrensvariante übernimmt also das Konvolution-Filter die Aufgabe der Mikroflächen im Ausführungsbeispiel nach Figur 2, nämlich in den Datensätzen des feinaufgelösten Halbtonbilds aus benachbarten Pixeln einen mittleren Tonwert zu bestimmen.

Beispiel 2:

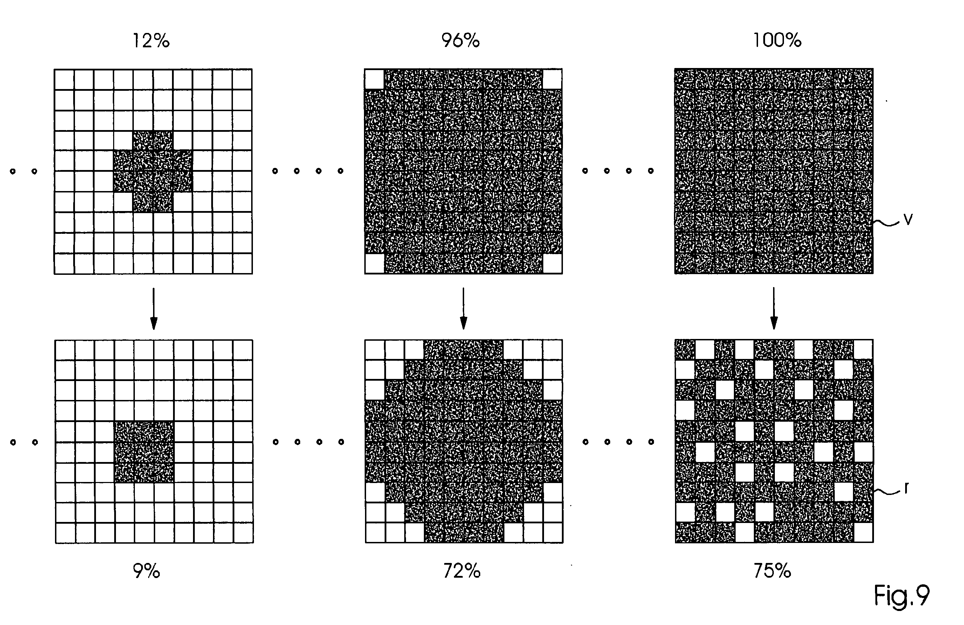

Gemäß einem zweiten Ausführungsbeispiel der Erfindung (Pfeil B3 in Figur 1) wird für die separierten Beschreibungen des Druckbogens festgelegt, wie die Volltonanteile des Druckbildes zu behandeln sind, d. h. die Bildpixel, deren Tonwerte bei 100 % oder oberhalb eines dem Vollton ziemlich nahekommenden Tonwerts wie z. B. 98 % oder 99 % liegen. Für die Bildbestandteile mit diesen Volltonwerten wird ein frequenzmoduliertes Rasterverfahren ausgewählt, das hinsichtlich der Zahl der weiß bleibenden Pixel in den Rasterzellen des gerasterten Datensatzes so eingerichtet ist, dass den Tonwerten von z. B. > 99 % anstelle des Volltons die gewünschte reduzierte Flächendeckung erzielt wird. Soll beispielsweise die Färbung im Vollton um 25 % verringert werden, werden die entsprechenden Bildbestandteile mit einem frequenzmodulierten Raster gerastert, das im Druck effektiv nur eine Flächendeckung von 75 % ergibt. Das ist in der Figur 9 in der rechten Spalte beispielhaft und vereinfacht dargestellt. Mit v ist dort eine Rasterzelle mit 10 x 10 Pixeln bezeichnet, deren einzelne Pixel für den Volltonfall alle hätten gesetzt werden müssen (100 % Flächendeckung). Stattdessen führt die Rasterung mit dem frequenzmodulierten Raster dazu, dass die mit r bezeichnete Rasterzelle mit einem Muster von Weißpunkten versehen und die Volltonbereiche entsprechend "durchlöchert" werden, was zu der gewünschten Reduzierung des Tonwerts auf die z. B. 75 % führt. Zweckmäßigerweise wird zur Vermeidung von sichtbaren Strukturen eine zufällig Verteilung der nichtdruckenden Pixel gewünscht und deshalb ein stochastisches Rasterverfahren für die Volltöne ausgewählt.

Hingegen werden alle Halbtöne des Bildes im Bereich zwischen dem Tonwert 0 % und dem Tonwert z. B. 99 % wie ursprünglich für den Druckjob geplant mit einem amplitudenmodulierten Raster aufgerastert. Dabei muss jedoch beachtet werden, dass keine Tonwertsprünge auftreten bzw. dass die Flächendeckungswerte von 0 ausgehend kontinuierlich bis zu dem Wert von hier 75 % für die reduzierte Flächendeckung der Volltöne zunehmen. Entsprechend sind die jeweiligen Schwellwertmatrizen auf den reduzierten Wert zu rekalibrieren und gegebenenfalls neu zu linearisieren. Das ist beispielhaft in der linken und mittleren Spalte der Figur 3 dargestellt. Dort sind die Flächendeckungswerte von 12 % und 96 % entsprechend der Rekalibrierung auf 9 % bzw. 72 % herabgesetzt, was sich durch entsprechend kleinere Rasterpunkte in den Zellen des Amplitudenrasters bemerkbar macht.

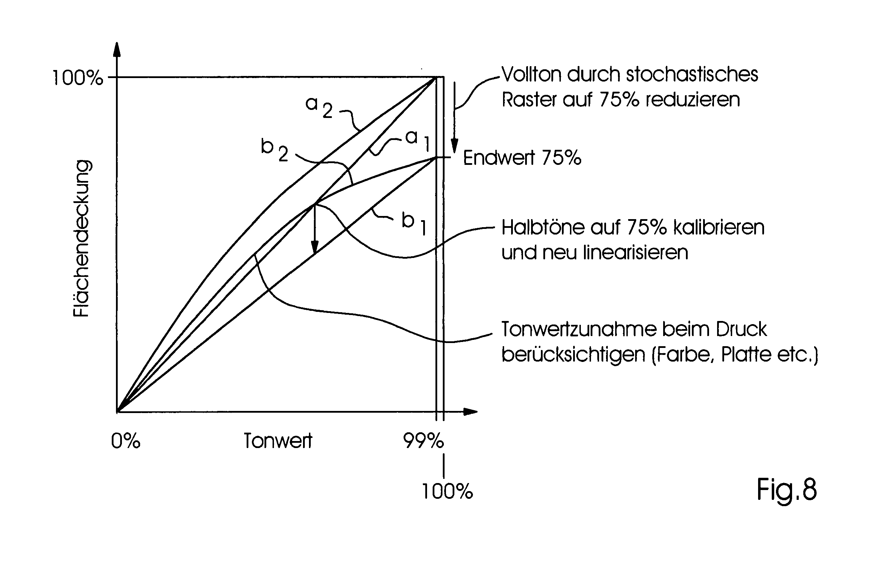

Verdeutlicht wird dieser Sachverhalt in der Darstellung nach Figur 8. In dem dort gezeigten Diagramm ist die Flächendeckung gegen den Tonwert aufgetragen, wobei der ideale Verlauf durch die mit a1 bezeichnete Gerade dargestellt ist und die mit a2 bezeichnete Kurve den Zusammenhang zwischen Tonwert und Flächendeckung unter Berücksichtigung der Tonwertzunahme beim Drucken beschreibt.

Die Aufrasterung der Flächen mit 100 % Tonwert führt zu einer Diskontinuität bei den Volltönen. Um dem zu begegnen, wird nun der Bereich der Flächendeckung auf 75 % rekalibriert, indem die Schwellwertmatrizen für das z. B. amplitudenmodulierte Raster für die Halbtöne im Bereich 0 bis 99 % modifiziert werden. Dies führt zu einer Verkippung der Geraden a1 in die mit b1 gezeichnete Stellung. Des Weiteren ist dann der Zusammenhang zwischen Tonwert und Flächendeckung entsprechend der Tonwertzunahme neu zu linearisieren, woraus sich dann die mit b2 bezeichnete Kurve ergibt.

Das Ausmaß der Linearisierung hängt von verschiedenen Parametern ab, wie der zu verdruckenden Farbe, ihrer Temperatur, vom Typ der verwendeten Druckplatte, von ihrer Feuchtung und gegebenenfalls auch noch vom Typ des verwendeten Gummituchs. Hier können wie auch bisher schon üblich empirisch ermittelte Verläufe verwendet werden, die entsprechend der vorstehend genannten Parameter aufgenommen und abgespeichert wurden. Ähnliches gilt auch für die verwendeten Arbeitsmittel: Die derzeit auf dem Markt befindlichen Werkzeuge für die Bearbeitung von Vorstufendaten erlauben das Kalibrieren und Linearisieren von Tonwerten zur Flächendeckung standardmäßig bzw. sind als entsprechende Funktionen in die Softwarepakete integriert. Im Softwarepaket "Prinect" der Heidelberger Druckmaschinen AG sind das z. B. die Werkzeuge "Kalibrationsmanager" und die Linearisierungsfunktion im Softwaremodul "MetaDimension". Dort werden auch verschiedene unterschiedliche Rasterverfahren zur Auswahl angeboten. Zur Durchführung des Verfahrens muss allerdings festgelegt werden, dass die den Volltonwerten zugeordnete Flächendeckung auf den gewünschten Wert mit dem stochastischen Raster "heruntergerastert" wird und die übrigen Bildbestandteile "normal" mit einem z. B. amplitudenmodulierten Raster gerastert werden, nachdem die zugehörigen Schwellwertmatrizen rekalibriert wurden.

**Bezugszeichenliste**

| 1 | Seite |
|----|-------|
| 2 | Ausschießen (Impositioning) |
| 3 | separierte Beschreibung des Druckbogens |
| 4 | Schwellwertmatrix |
| 5 | Rasterprozess |
| 6 | gerasterter Datensatz |
| 7 | Plattenbelichter |
| 8b | Druckplatte "Schwarz" |
| 8y | Druckplatte "Gelb" |
| 8m | Druckplatte "Magenta" |
| 8c | Druckplatte "Cyan" |
| 9 | Bogenoffsetdruckmaschine |
| 10 | Druckbogen |
| 11 | Bewertung des Bogens |
| 13m | Halbtonbild Datensatz "Magenta" |
| 14 | Datenfeld |
| 14a,b | Mikrofläche |
| 15n, m | "auf Weiß" gesetzte Pixel |
| 20 | Pfeil |
| 23 | Schwellwertmatrix |
| 24 | Schwellwertgebirge schneidende Fläche |
| 25 | geschnittener Teil (Schwellwertgebirge) |
| 114a, b | Pixel |
| Z | Höhe |
| a1 | Gerade |
| a2 | Kurve |
| b1 | Stellung (a1) |
| b2 | Kurve |
| v | Rasterzelle Vollton |
| r | Rasterzellen |
| $B_2$ | Pfeil |

**Patentansprüche**

1. Verfahren zur Herstellung von Druckplatten mit reduzierter Flächendeckung, wobei vor dem Schritt des Rasterns der Bilddaten für die anschließende Belichtung der Druckformen in den Dateien, die Bilddaten enthalten, die Daten verändert werden, indem Bilddatensätze erzeugt werden, die in Mikroflächen unterteilt werden, die ihrerseits aus Pixeln aufgebaut sind und sodann die Durchschnittstonwerte innerhalb der Mikroflächen bestimmt und daraus entsprechend einem an der gewünschten Tonwertreduzierung orientierten Zusammenhang für die jeweilige Mikrofläche eine Anzahl von Pixeln bestimmt wird, die anschließend gelöscht d. h. auf den Wert (0) gesetzt werden, der einer unbedeckten Fläche (Weiß) im Druckbild entspricht.

2. Verfahren nach Anspruch 1, wobei die Pixel die gleiche Größe, ein ganzzahliges Vielfaches oder eine ganzzahlige Teilgröße der Größe der Pixel des in einem der nachfolgenden Schritte gerasterten Bildes besitzen.

3. Verfahren nach Anspruch 2, wobei die Positionen der zu löschenden Pixel innerhalb der Mikrofläche entsprechend der Tonwertverteilung gewählt werden derart, dass sie im oder in der Nähe des Schwerpunktes der Tonwertverteilung angeordnet werden, oder an fest vorgegebenen Stellen innerhalb der Mikroflächen festgesetzt werden, vorzugsweise den Stellen, auf die beim späteren Prozess des Rasterns die Pixel zwischen den Zentren der Rasterpunkte fallen.

4. Verfahren nach einem der Ansprüche 2 bis 3, wobei die Pixel der Mikroflächen bzw. deren Tonwert bei der Akkumulierung über die gesamte Mikrofläche mit Gewichtungsfaktoren belegt werden.

5. Verfahren nach Anspruch 1, wobei die Bilddaten gefiltert werden und die Maxima der Tonwerte im gefilterten Bild zur Bestimmung der zu löschenden Pixel herangezogen werden.

6. Verfahren nach einem der Ansprüche 4 bis 5, wobei die Entscheidung über die auf (0) zu setzenden Pixel mit Hilfe eine Konvolution Filters getroffen wird.

7. Verfahren nach einem der Ansprüche 2 bis 6, wobei die Änderung der Werte von einzelnen Elementen in den zweidimensionalen Datenfeldern unter Verwendung eines Error Diffusion-Algorithmus erfolgt, derart, dass einzelne Elemente dann geändert bzw. ihr Wert vorzugsweise gelöscht bzw. auf einen der Farbe Weiß entsprechenden Wert gesetzt wird, wenn aufakummulierte Tonwerte einen vordefinierten Schwellwert überschreiten, und wobei die verbleibende Differenz zwischen dem aufakummulierten Tonwert und dem Schwellwert bei der Bestimmung des nächsten zu ändernden Wertes mit berücksichtigt wird.

**8.** Verfahren nach einem der Ansprüche 2 bis 4, wobei sich die Mikroflächen teilweise überlappen.

**9.** Verfahren nach einem der Ansprüche 1 bis 8, wobei bei der Berechnung zu löschender Pixel eine Kalibrierkurve berücksichtigt wird, die einen fehlerhaften Punktzuwachs in Druck korrigiert..

**10.** Verfahren zur Herstellung von Druckplatten mit reduzierter Flächendeckung, wobei vor dem Schritt des Rasterns der Bilddaten für die anschließende Belichtung der Druckformen in einer oder mehreren für den Schritt des Rasterns benötigten Dateien die Daten verändert werden,
**dadurch gekennzeichnet,**
**dass** die Vollton-Bildstellen mit einem frequenzmodulierten Raster derart gerastert werden, dass die Menge der weiß bleibenden Pixel in den Rasterzellen (r) zur gewünschten Reduzierung der Volltondichte führt, dass die Schwellwertmatrix (4) für die Rasterung der Halbtöne verändert wird, indem sie auf den reduzierten Wert der Volltondichte kalibriert wird und dass die Halbton-Bildstellen unter Anwendung der rekalibrierten Schwellwertmatrix gerastert werden.

**11.** Verfahren nach Anspruch 10, wobei es sich bei dem frequenzmodulierten Raster für die Volltöne um ein stochastisches Raster handelt und die Rasterung der Halbtöne mit einem amplitudenmodulierten Raster erfolgt.

**12.** Verfahren nach Anspruch 11, wobei die Kalibrierung der Schwellwertmatrix für die Rasterung der Halbtöne entweder linear oder nach vorgegebenen Funktionen (b2) erfolgt, deren Verlauf abhängig von der zu verdruckenden Farbe und/oder der verwendeten Druckplatte und/oder des verwendeten Gummituchs und/oder der beim Druck zugeführten Feuchtmittelmenge ist.

**Claims**

**1.** Method for creating printing plates with reduced area coverage, wherein prior to the step of screening the image data for the subsequent exposure of the printing formes, the data in files that contain image data are modified in that image data sets are generated that are subdivided into micro-areas that in turn consist of pixels and then average tonal values are determined within the micro-areas and for the respective micro-area, a number of pixels subsequently to be erased, i.e. set to the value (0) corresponding to a non-covered area (white) in the printed image, is determined based on the average tonal values in accordance with a relationship geared to the desired tonal value reduction.

**2.** Method according to claim 1, wherein the pixels have the same size as or a size corresponding to an integer multiple or an integer fraction of the size of the pixels of the image that is screened in one of the following steps.

**3.** Method according to claim 2, wherein the positions within the micro-area of the pixels to be erased are selected in accordance with the tonal value distribution in such a way that they are disposed in or in the vicinity of the main area of the tonal value distribution or fixed in pre-defined locations within the micro-areas, preferably the locations in which the pixels between the centres of the screen dots will be located in the later screening process.

**4.** Method according to any one of claims 2 to 3, wherein weighting factors are applied to the pixels of the micro-areas and their tonal value, respectively, in the accumulation process across the entire micro-area.

**5.** Method according to claim 1, wherein the image data are filtered and the maxima of the tonal values in the filtered image are used to determine the pixels to be erased.

**6.** Method according to any one of claims 4 to 5, wherein the decision on which pixels to set to (0) is made with the aid of a convolution filter.

**7.** Method according to any one of claims 2 to 6, wherein the modification of the values of individual elements in the two-dimensional data fields is made using an error diffusion algorithm such that individual elements are modified or their values are preferably erased or set to a value corresponding to the color white when accumulated tonal values exceed a pre-defined threshold, and wherein the remaining difference between the accumulated tonal value and the threshold is taken into account when determining the next value to be modified.

**8.** Method according to any one of claims 2 to 4, wherein the micro-areas partly overlap.

**9.** Method according to any one of claims 1 to 8, wherein a calibration curve is taken into account when calculating pixels to be erased, the calibration curve correcting defective dot gains in the print.

10. Method for creating printing plates with reduced area coverage, wherein prior to the step of screening the image data for the subsequent exposure of the printing formes, the data in one or more files that are required for the screening step are modified, **characterized in that** the full-tone image locations are screened using a frequency-modulated screen in such a way that the amount of pixels that remain white in the screen cells (r) leads to the desired reduction of the full-tone density, that the threshold matrix (4) for the screening of the halftones is modified in that it is calibrated to the reduced value of the full-tone density and that the halftone image locations are screened using the recalibrated threshold matrix.

11. Method according to claim 10, wherein the frequency-modulated screen for the full tones is a stochastic screen and wherein the screening of the halftones is done using an amplitude-modulated screen.

12. Method according to claim 11, wherein the calibration of the threshold matrix for the screening of the halftones is done either linearly or in accordance with predetermined functions (b2) whose progression depends on the ink to be applied and/or the printing plate that is used and/or on the blanket that is used and/or on the amount of dampening solution supplied during printing.

**Revendications**

1. Procédé pour la fabrication de plaques d'impression avec une couverture de surface réduite, avant l'étape du tramage des données d'image pour l'insolation consécutive des formes d'impression dans les fichiers, qui contiennent des données d'image, les données étant modifiées dans le fait que des jeux de données d'image sont générés qui sont divisés en micro-surfaces, qui sont à leur tour constituées de pixels et ainsi déterminent les tonalités moyennes à l'intérieur des micro-surfaces et à partir de cela en fonction d'un rapport axé sur la réduction de la tonalité souhaitée, un nombre de pixels étant déterminé pour la micro-surface respective, qui sont ensuite supprimés, c'est-à-dire sont placés à la valeur (0) correspondant à une surface non couverte (blanc) dans l'image d'impression.

2. Procédé selon la revendication 1, les pixels possèdent la même taille, un multiple entier ou un taille partielle entière de la taille des pixels de l'image tramée dans l'une des étapes suivantes.

3. Procédé selon la revendication 2, les positions des pixels à supprimer à l'intérieur de la micro-surface étant sélectionnées en fonction de la répartition de la tonalité de sorte qu'ils sont disposés dans ou à proximité du centre de gravité de la répartition de la tonalité, ou étant fixées à des endroits prédéterminés à l'intérieur des micro-surfaces, de préférence aux endroits où les pixels tombent entre les centres des points de trame pendant le processus de tramage ultérieur.

4. Procédé selon l'une des revendications 2 à 3, les pixels des micro-surfaces respectivement leurs tonalités étant affectés de facteurs de pondération lors de l'accumulation sur l'ensemble de la micro-surface.

5. Procédé selon la revendication 1, les données d'images étant filtrées et les maximas des tonalités étant utilisés dans l'image filtrée pour la détermination des pixels à supprimer.

6. Procédé selon l'une des revendications 4 à 5, la décision sur les pixels à placer sur (0) étant prise à l'aide d'une convolution de filtre.

7. Procédé selon l'une des revendications 2 à 6, la modification des valeurs d'éléments individuels étant effectuée dans les champs de données bidimensionnels en utilisant un algorithme de diffusion d'erreur, de sorte que des éléments individuels ont été alors modifiés respectivement leurs valeurs de préférence supprimées, respectivement sont placés à une valeur correspondante à la valeur Blanc, si des tonalités accumulées dépassent une valeur seuil prédéfinie, la différence restante entre la tonalité accumulée et la valeur seuil étant prise en compte à la détermination de la prochaine valeur à modifier.

8. Procédé selon l'une des revendications 2 à 4, les micro-surfaces se chevauchant partiellement.

9. Procédé selon l'une des revendications 1 à 8, lors du calcul des pixels à supprimer, une courbe de calibrage étant prise en compte, qui corrige dans l'impression une augmentation défectueuse de point.

10. Procédé pour la fabrication de plaques d'impression avec une couverture de surface réduite, avant l'étape du tramage des données d'image pour l'insolation consécutive des formes d'impression, les données étant modifiées dans un ou plusieurs fichiers nécessaires pour l'étape de tramage, **caractérisé en ce que** les endroits d'image de ton plein sont tramés à une trame modulée par fréquence de sorte que la quantité de pixels restés en blanc dans les cellules de trame (r) entraîne une réduction souhaitée de la densité des tons pleins, en ce que la matrice de valeurs seuil (4) a été modifiée pour le tramage des demi-tons, et en ce que les endroits d'images de demi-ton ont été tramés en utilisant la matrice recalibrée de valeur seuil.

11. Procédé selon la revendication 10,
dans lequel, pour la trame modulée par fréquence pour les tons pleins, il s'agit d'une trame stochastique et le tramage des demi-tons s'effectue par une trame modulée par amplitude.

12. Procédé selon la revendication 11,
le calibrage de la matrice de valeur seuil pour le tramage des demi-tons étant effectuée soit linéairement soit selon des fonctions prédéterminées (b2), dont l'évolution dépend de l'encre à imprimer et/ou de la plaque d'impression utilisée et/ou du blanchet utilisé et/ou de la quantité d'agent mouillant apporté à l'impression.

Fig.1

Impositioning

separierte
Beschreibung
des Druckbogens

Auswahl des
Rasterverfahrens,
Linienzahl, etc.

Schwellwertmatrix

Tonwerte im
Halbtonbild ändern

Volltondichte
stochastisch
reduzieren

Schweilwerte
ändern

Rasterung (RIP)

gerasterter
Datensatz
2400 dpi

Mikroraster
überlagern
(St. d. Technik)

Plattenbelichter
Filmbelichter
Proofer

belichtete
Druckplatten,
Filme, Proofs

Flächendichte
reduzieren

Bewertung

Druckmaschine

Druckbogen

Fig.2

Fig.3a

| 3 | 9 | . | . | . | . | . | . | 7 | 1 |
|---|---|---|---|---|---|---|---|---|---|
| 8 | . | . | . | . | . | . | . | . | 6 |
| . | . | . | . | . | . | . | . | . | . |
| . | . | . | 86 | 93 | 92 | 85 | . | . | . |
| . | . | . | 94 | 99 | 98 | 91 | . | . | . |
| . | . | . | 95 | 96 | 97 | 90 | . | . | . |
| . | . | . | 84 | 88 | 89 | 87 | . | . | . |
| . | . | . | . | . | . | . | . | . | . |
| 4 | . | . | . | . | . | . | . | . | 11 |
| 0 | 5 | . | . | . | . | . | . | 10 | 2 |

23m

Fig.3b

Fig.4

EP 2 112 818 B1

Fig.5a

Fig.5b

EP 2 112 818 B1

Fig.6a

Fig.6b

Fig.7a

Fig.7b

Vollton durch stochastisches
Raster auf 75% reduzieren

Endwert 75%

Halbtöne auf 75% kalibrieren
und neu linearisieren

Tonwertzunahme beim Druck
berücksichtigen (Farbe, Platte etc.)

$a_1$

$b_1$

$a_2$

$b_2$

100%

Flächendeckung

0%   99%   100%

Tonwert

Fig.8

Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0770228 B1
- EP 1251011 B1
- DE 19953145 A1
- US 6532082 B1
- EP 1834775 A2